# EUROPEAN PATENT APPLICATION

(11) **EP 1 795 505 A1**
(43) Date of publication of application: **13.06.2007**
(21) Application number: 05776095.1
(22) Date of filing: 30.08.2005
(51) Int. Cl.: C03B 35/18, B65G 39/04

(54) **DISK ROLL**

(30) Priority: 31.08.2004 JP 2004253152
(71) Applicant: Corning Japan K.K., 1-11-44, Akasaka, Minato-ku Tokyo 107-0052 (JP); NICHIAS CORPORATION, Tokyo 105-8555 (JP)
(72) Inventor: TSUDA, Hidetaka c/o CORNING JAPAN K.K, Minato-ku, Tokyo 107-0052 (JP); TAHARA, Daiji NICHIAS CORPORATION, Hamamtsu Resarch Centre, Shizuoka (JP); NAKAYAMA, Masaaki NICHIAS CORPORATION, Hammamatsu Research Centre, Shizuoka (JP); ITOH, Chikako c/o CORNING JAPAN K.K, Minato-ku, Tokyo 107-0052 (JP)
(74) Representative: Grünecker, Kinkeldey, Stockmair & Schwanhäusser Anwaltssozietät
(86) International application number: PCT/JP2005/015789
(87) International publication number: WO 2006/025402

(57) **Abstract**

A disk roll for use in conveying a member in a heated state, the disk roll comprising: a first disk roll part formed by stacking plural sheets of first disks which are made of a material that tends to shrink upon heating; and a second disk roll part formed by stacking plural sheets of second disks which are made of a material that tends to expand upon heating, the outer diameter of the first disks being larger than the outer diameter of the second disks. According to the present invention, a disk roll which is remarkably reduced in powder falling as compared with the conventional one and has high thermal shock resistance can be provided.

## Description

### TECHNICAL FIELD

The present invention relates to a disk roll for use in conveying a member in a heated state, such as, e.g., a glass plate discharged from a melting furnace. More particularly, the invention relates to a disk roll for conveyance suitable for use in a step for producing a high-quality glass plate.

### BACKGROUND ART

In a process for glass plate production, a conveying mechanism is necessary for annealing the glass plate formed from a molten-state glass. This conveying mechanism is generally constituted by conveying rolls, and the disk roll is a kind of such conveying roll.

The glass plate being conveyed is in the state of having a high temperature of about 400-800°C and has low strength. The disk rolls are hence required to have some degree of flexibility so as not to damage the glass plate, besides heat resistance and wearing resistance. In addition, since there is a trend of enlargement in size of glass plates to be produced and the load imposed on the disk rolls tend to become larger accordingly, the disk rolls are simultaneously required to have higher strength.

With respect to these requirements, there is known, for example, a disk roll produced by forming doughnut-shape molded plates (disks) having a bulk density of 0.5 g/cm³ or higher using silica-alumina fibers, an inorganic binder and an organic binder as main ingredients, passing a shaft through plural sheets of the disks to stack them, pressing the stacked disks from both ends to effect sandwich-tightening under compression and thereby form a cylindrical roll, impregnating the surface thereof with an inorganic colloidal solution, and drying the roll (see patent document 1).
Patent Document 1: Japanese Patent No. 2568845

However, the disk roll described above has the following drawback because of its constitution comprising a stack of disks. The individual disks shrink in the thickness direction due to the heat conducted from the glass plate in a heated state to form a gap between the disks. As a result, the so-called falling of powder is apt to occur in which fine fiber pieces, binder particles, etc. shed. At present, there is a trend toward size increase in television receiver screens, and plasma displays and liquid-crystal displays are also coming to spread. The glass plates for use in these applications are required to have higher quality and the falling of powder accompanying conveyance is becoming a problem which is not negligible.

### DISCLOSURE OF THE INVENTION

### PROBLEM THAT THE INVENTION IS TO SOLVE

The invention has been achieved under these circumstances. An object of the invention is to provide a disk roll which is remarkably reduced in powder falling as compared with the conventional one and has high thermal shock resistance.

### MEANS FOR SOLVING THE PROBLEM

In order to accomplish the object, the invention provides a disk roll for use in conveying a member in a heated state, the disk roll comprising a first disk roll part formed by stacking plural sheets of first disks which are made of a material that tends to shrink upon heating and a second disk roll part formed by stacking plural sheets of second disks which are made of a material that tends to expand upon heating, the outer diameter of the first disks being larger than the outer diameter of the second disks.

According to the constitution described above, the member being conveyed is supported by the first disk roll part, and the thickness-direction shrinkage of the first disk roll part caused by the heat transferred from the member being conveyed is compensated for by the thickness-direction expansion of the second disk roll part, whereby interlayer separation of the disks can be suppressed.

In the invention, the disk roll preferably is one in which the first disks and the second disks each are a molded article comprising inorganic fibers, an inorganic filler, an inorganic binder and an organic binder, and the first disks have a lower density and higher flexibility than the second disks. In this constitution, the shocks which the member being conveyed receives during conveyance are mitigated and the member being conveyed is prevented from being damaged. In addition, the second disk roll part serves to maintain strength, whereby the strength of the whole disk roll can be maintained.

Further, it is preferred in the disk roll of the invention that the first disk roll part should have been impregnated with lithium silicate and colloidal silica, and the second disk roll part should have been impregnated with colloidal silica. In this constitution, the first disk roll part can more highly satisfy properties required for the part coming into contact with the member to be conveyed, i.e., strength, non-occurrence of powder falling, and thermal shock resistance. In addition, the second disk roll part also can be prevented from causing powder falling. Incidentally, the second disk roll part does not come into contact with the member being conveyed, and hence, the heat resistance required for the second disk roll part is not so high as for the first disk roll part. Because of this, an impregnant comprising colloidal silica only suffices for the second disk roll part and a cost reduction can be attained.

### ADVANTAGE OF THE INVENTION

According to the invention, a disk roll more reduced in powder falling and having high thermal shock resistance can be provided.

### BRIEF DESCRIPTION OF THE DRAWINGS

[Fig. 1] Fig. 1 is a side view illustrating part of steps for producing a disk roll according to the invention.
[Fig. 2] Fig. 2 is a side view illustrating part of the steps for producing the disk roll according to the invention.
[Fig. 3] Fig. 3 is a side view illustrating the disk roll according to the invention.
[Fig. 4] Fig. 4 is a diagrammatic view illustrating the method of measuring elastic deformation used in the Example and Comparative Examples.

### DESCRIPTION OF REFERENCE NUMERALS AND SIGNS

101: shaft
102a, 102b: nut
103a, 103b: flange
104: first disk
110: second disk
111: processing line

### BEST MODE FOR CARRYING OUT THE INVENTION

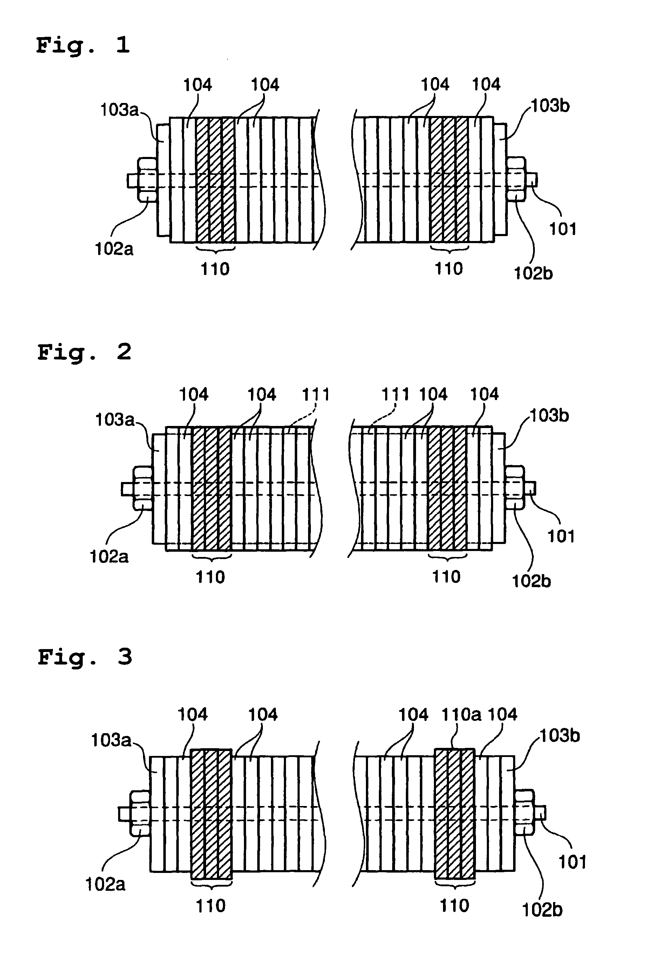

An embodiment of the disk roll according to the invention will be explained in detail by reference to Fig. 1 to Fig. 3 (each being a side view) illustrating steps for the production thereof. Fig. 3 is a view showing the completed state of a disk roll. This disk roll as a whole is constituted of first disk roll parts each made up of first disks 110 and second disk roll parts each made up of second disks 104.

First, the first disks 110 for constituting the first disk roll parts and the second disks 104 for constituting the second disk roll parts are produced. The first disks 110 and the second disks 104 each are a molded article comprising inorganic fibers, an inorganic filler, an inorganic binder and an organic binder. However, the compositions of the two kinds of disks are regulated so that the first disks 110 have a lower density and higher flexibility than the second disks.

The inorganic fibers preferably are ceramic fibers. For example, alumina fibers, silica fibers, silica-alumina fibers, or the like can be advantageously used. As the inorganic filler, for example, alumina particles, Kibushi clay, kaolin particles, mica particles, or the like can be advantageously used. As the inorganic binder, for example, a silica sol, alumina sol, or the like can be advantageously used. As the organic binder, for example, an emulsion of an acrylic, etc., an alpha starch paste, or the like can be advantageously used.

The first disks 110 may be obtained in the following manner. An aqueous slurry is prepared which contains given amounts of the inorganic fibers, inorganic filler, inorganic binder and organic binder. This aqueous slurry is molded with dehydration and dried to form a platy material having a given thickness. A dispersant, fixing agent, coagulant, etc. may be added to the aqueous slurry according to need. The amount of the inorganic fibers to be incorporated into the first disks preferably is 40-60% by weight. In case where the amount thereof is smaller than 40% by weight, necessary repulsive (restoring) force is not obtained. In case where the amount thereof exceeds 60% by weight, not only the raw disk plate has a reduced density and this makes it impossible to obtain high repulsive force, but also such high proportions of the inorganic fibers exert a considerable adverse influence on productivity. On the other hand, the amount of the inorganic filler to be incorporated preferably is 40-60% by weight. In case where the amount thereof is smaller than 40% by weight, the resultant roll has an increased amount of voids inside and cannot have necessary strength. In case where the amount thereof exceeds 60% by weight, the roll is too rigid and may exert an adverse influence, such as, e.g., giving a scratch on the glass plate as a work. Subsequently, disks having a given outer diameter and a given inner diameter are cut out of the platy material to obtain first disks 110. Although the density of the first disks 110 varies depending on the member to be conveyed, the appropriate range thereof is, for example, about 0.8-1.7 g/cm³ when the disks are for use in conveying general glass plates.

The second disks 104 also may be obtained likewise by forming a platy material from an aqueous slurry having a regulated composition and cutting disks having the same shape as the first disks 110 out of the platy material. Although the density of the second disks 104 varies depending on the member to be conveyed, the appropriate range thereof may be about 1.0-1.7 g/cm³ when the disks are for use in conveying general glass plates like the first disks 110.

Subsequently, the first disks 110 and second disks 104 thus obtained are introduced to a shaft 101 made of a metal (e.g., iron) as shown in Fig. 1. In this operation, a nut 102a and a flange 103a are fitted beforehand to one end of the shaft 101. First, a given number of second disks 104 are introduced to the shaft 101, and then a given number of first disks 110 are introduced. Thereafter, a given number of second disks 104 are introduced to the shaft 101, a given number of first disks 110 are introduced, and then a given number of second disks 104 are further introduced. Finally, a flange 103b and a nut 102b are fitted. The numbers of the first disks 110 and the second disks 104 are appropriately determined according to the overall length of the disk roll, thickness of each disk, kind of the member to be conveyed, etc.

Subsequently, the nuts 102a and 102b are tightened to press the disks from both sides through the two flanges 103a and 103b and thereby bring the disks into pressure contact with each other. In this operation, the pressure is regulated so that the first disks 110 and the second disks 104 are compressed by about 20% and about 50% (each in thickness), respectively. Thus, the state shown in Fig. 1 is obtained.

Grinding is then conducted, for example, to the processing line shown by the dotted line 111 in Fig. 2 to thereby obtain the first disks 110 having a larger diameter than the second disks 104. The grinding amount (thickness) is appropriately determined according to the overall length of the disk roll, thickness of each disk, kind of the member to be conveyed, etc.

As a result of this grinding, a disk roll having a side shape such as that shown in Fig. 3 is obtained. The first disks 110 constitute contact parts 110a which come into contact with the member to be conveyed.

It is preferred that the disk roll be subjected to an impregnation treatment for the purposes of further improving thermal shock resistance and preventing powder falling with higher certainty. In this impregnation treatment, the first disks 110, which come into contact with the member to be conveyed, are impregnated with a liquid mixture of colloidal silica and lithium silicate in order to impart thermal shock resistance thereto. Upon drying, this liquid mixture of colloidal silica and lithium silicate comes to have a molecular structure showing high bonding strength through the formation of alternate linkage of silicon atoms and oxygen atoms as shown below. As a result, high thermal shock resistance is obtained.

### [Ka-1]

### (Solution state)

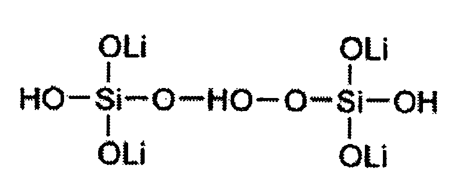

### (Dry state)

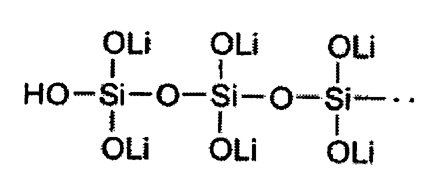

It should, however, be noted that impregnation with lithium silicate tends to cause the first disks 110 to shrink upon heating. In the case where, for example, a glass plate is conveyed, since the glass plate is in the state of being heated at 400-800°C, the individual first disks 110 shrink in the thickness direction due to the heat thereof to cause interlayer separation between the disks, making it impossible to use the disk roll. Consequently, the proportions of the colloidal silica and lithium silicate in the liquid mixture thereof is preferably such that the ratio of (colloidal silica):(lithium silicate) is from 90:10 to 99:1, from the standpoints of the improvement of thermal shock resistance and the degree of shrinkage.

The amount of the liquid mixture of colloidal silica and lithium silicate with which the first disks 110 are to be impregnated is important in designing roll flexibility. Small impregnation amounts result in a flexible roll, while large impregnation amounts result in a rigid roll. In the invention, a suitable impregnation amount is 5-60% in terms of proportion by volume.

After the impregnation, the disks are dried, for example, at 80°C for about 12 hours to complete the impregnation treatment. The first disks 110 obtained through this impregnation treatment contain a colloidal silica ingredient and a lithium silicate ingredient, and the concentrations of these ingredients increase toward the disk surface. Thus, high thermal shock resistance is imparted to the first disks 110.

On the other hand, the second disks 104 need not have thermal shock resistance as high as that of the first disks 110 because they do not come into contact with the member being conveyed. Consequently, the second disks 104 are impregnated with colloidal silica in an amount of 0.5-20% in terms of proportion by volume. Thus, the cost of impregnants can be reduced.

Furthermore, since the second disks 104 do not contain lithium silicate, the thermal shrinkage described above is inhibited and the disks in a pressure contact state show an intense repulsive force. This brings about an advantage that the thickness-direction shrinkage of the first disks 110 is compensated for by the repulsive force of the second disks 104 to thereby make the first disks 110 less apt to cause interlayer separation between these.

The disk roll of the invention thus obtained is thermally stable and is significantly reduced in powder falling. In addition, the first disk roll parts, which comprise first disks 110 having moderate flexibility, can be always in soft contact with a glass to prevent the glass from being damaged and enable the member being conveyed to be satisfactorily conveyed while causing no vibrations, etc. On the other hand, the second disk roll parts, which comprise second disks 104, suppress the occurrence of interlayer separation of the disks due to the thermal shrinkage in the first disk roll parts. Thus, stable conveyance is maintained over a long period of time.

### EXAMPLE 1

The invention will be illustrated in greater detail by reference to the following Example, but the invention should not be construed as being limited thereto.

### (EXAMPLE 1)

### First Disks:

The raw materials and water shown below were mixed together to prepare an aqueous slurry. This slurry was molded with dehydration and dried to obtain a platy molded article having a thickness of 15 mm. Subsequently, first disks having an outer diameter of 200 mm, inner diameter, i.e., hole diameter, of 100 mm, and thickness of 15 mm were punched out of the platy molded article with a press. The first disks obtained had a density of 0.6 g/cm³. Although these disks were more flexible than the second disks described below, they were inferior in strength.

| | |
|---|---|
| Water incorporated | 3,000 parts by weight |
| Silica-alumina fibers (fiber diameter, 3 µm) | 40 parts by weight |
| Alumina particles (particle diameter, 0.5-3.0 µm) | 60 parts by weight |
| Inorganic binder (silica sol: dry solid ingredient) | 5 parts by weight |
| Organic binder (acrylic emulsion) | 5 parts by weight |
| Inorganic fixing agent (5% aqueous solution) | 3 parts by weight |
| Polymeric coagulant (0.05% aqueous solution) | 6 parts by weight |

### Second Disks:

The raw materials and water shown below were mixed together to prepare an aqueous slurry. This slurry was molded with dehydration and dried to obtain a platy molded article having a thickness of 15 mm. Subsequently, second disks having an outer diameter of 200 mm, inner diameter, i.e., hole diameter, of 100 mm, and thickness of 15 mm were punched out of the platy molded article with a press. The second disks obtained had a density of 1.0 g/cm³, and had a higher strength than the first disks.

| | |
|---|---|
| Water incorporated | 3,000 parts by weight |
| Silica-alumina fibers (fiber diameter, 3 µm) | 10 parts by weight |
| Kibushi clay (particle diameter, 3.0 µm) | 40 parts by weight |
| Mica particles (particle diameter, 100-300 µm) | 40 parts by weight |
| Organic binder (alpha starch paste) | 5 parts by weight |
| Inorganic fixing agent (5% aqueous solution) | |
| | 3 parts by weight |
| Polymeric coagulant | 6 parts by weight |

### Production of Disk Roll:

As shown in Fig. 1, a nut 102a and a flange 103a were fitted to a shaft 101 made of iron, and second disks 104 to make a thickness of 10 cm, first disks 110 to make a thickness of 20 cm, second disks 104 to make a thickness of 150 cm, first disks 110 to make a thickness 20 cm, and second disks 104 to make a thickness of 10 cm were introduced to the shaft 101 in this order. A flange 103b and a nut 102b were then fitted thereto. Thereafter, the nuts 102a and 102b were tightened through the flanges 103a and 103b to bring the disks into press contact with each other. As a result of this operation, the first disks 110 and the second disks 104 came to have densities of 0.8 g/cm³ and 1.4 g/cm³, respectively.

Subsequently, as shown in Fig. 2, the second disks 104 were ground to remove a surface layer thereof having a thickness of 4 mm to form a disk roll such as that shown in Fig. 3.

Subsequently, a liquid mixture of colloidal silica and lithium silicate (colloidal silica:lithium silicate = 95:5) was applied to the first disk roll parts composed of first disks 110, in an amount of 50% in terms of proportion by volume. Furthermore, colloidal silica was applied to the second disk roll parts composed of second disks 104, in an amount of 5% in terms of proportion by volume. All these disk roll parts were dried at 80°C for 12 hours to obtain a disk roll.

The disk roll obtained was mounted in an actual glass plate conveying mechanism and this conveying mechanism was practically used to convey a glass plate sent from a melting furnace. As a result, the glass surface suffered no scratches and, even after the lapse of 1,000 hours, no powder falling was observed. The conveyance was stably conducted.

### Measurement of Elastic Deformation:

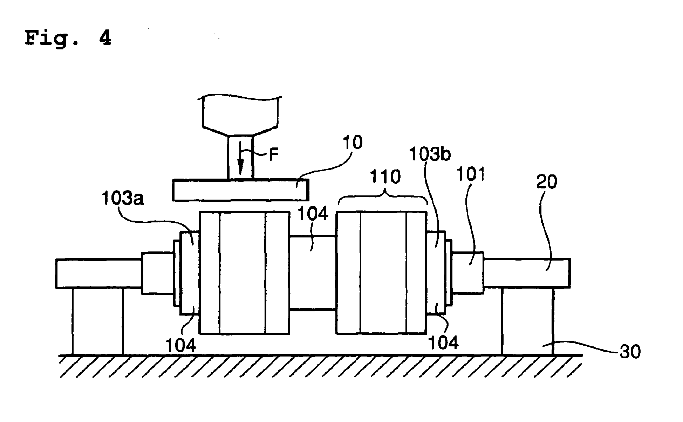

A disk roll having the shape shown in Fig. 4 was produced using the same first disks 110 and second disks 104 as those shown above, and the elastic deformation of the first disks 110 was measured. The measurement was made in the following manner. As shown in the figure, a supporting rod 20 was inserted into a shaft 101, and the supporting rod 20 was fixed on a pair of supporting tables 30 placed on the left and right sides. A compressive load F of 9 kgf/cm was imposed on one of the first disks 110 through an indentator 10 and the amount of the resultant deformation was determined. As a result, the first disk 110 showed such flexibility that it had an elastic deformation of 0.05 mm under a load of 9 kgf/cm.

### (COMPARATIVE EXAMPLE 1)

The second disks 104 in Example 1 only were used to fabricate a disk roll having the same shape as in Example 1. Furthermore, a liquid mixture of colloidal silica and lithium silicate (colloidal silica:lithium silicate = 95:5) was applied thereto in an amount of 50% in terms of proportion by volume. All the disks were dried at 80°C for 12 hours to obtain a disk roll.

The disk roll obtained was mounted in an actual glass plate conveying mechanism and this conveying mechanism was practically used to convey a glass plate sent from a melting furnace. As a result, the surface of the glass plate received innumerable scratches and this glass was unable to be used as a product. Furthermore, elastic deformation was measured in the same manner as in Example 1. As a result, the elastic deformation of the disks was 0.01 mm or smaller and was unable to be determined.

### (COMPARATIVE EXAMPLE 2)

The first disks 104 in Example 1 only were used to fabricate a disk roll having the same shape as in Example 1. Furthermore, a liquid mixture of colloidal silica and lithium silicate (colloidal silica:lithium silicate = 95:5) was applied thereto in an amount of 50% in terms of proportion by volume. All the disks were dried at 80°C for 12 hours to obtain a disk roll.

The disk roll obtained was mounted in an actual glass plate conveying mechanism and this conveying mechanism was practically used to convey a glass plate sent from a melting furnace. As a result, a relatively wide gap was formed between the disks in an early stage.
While the invention has been described in detail and with reference to specific embodiments thereof, it will be apparent to one skilled in the art that various changes and modifications can be made therein without departing from the spirit and scope thereof.

This application is based on Japanese Patent Application No. 2004-253152 filed on August 31, 2004, the contents thereof being herein incorporated by reference.

### INDUSTRIAL APPLICABILITY

According to the invention, a disk roll which is more reduced in powder falling and has high thermal shock resistance can be provided.

## Claims

1. A disk roll for use in conveying a member in a heated state, the disk roll comprising: a first disk roll part formed by stacking plural sheets of first disks which are made of a material that tends to shrink upon heating; and a second disk roll part formed by stacking plural sheets of second disks which are made of a material that tends to expand upon heating, the outer diameter of the first disks being larger than the outer diameter of the second disks.

2. The disk roll of claim 1, wherein the first disks and the second disks each are a molded article comprising inorganic fibers, an inorganic filler and a binder, and wherein the first disks have a lower density and higher flexibility than the second disks.

3. The disk roll of claim 1 or 2, wherein the first disks are molded articles comprising 40-60 parts by weight of inorganic fibers and 40-60 parts by weight of an inorganic filler.

4. The disk roll of any one of claims 1 to 3, wherein the first disk roll part has been impregnated with lithium silicate and colloidal silica, and the second disk roll part has been impregnated with colloidal silica.
